(19)

Europäisches
Patentamt
European
Patent Office
Office européen
des brevets

(11) **EP 4 578 974 A1**

(12) **EUROPEAN PATENT APPLICATION**
published in accordance with Art. 153(4) EPC

(43) Date of publication:
**02.07.2025 Bulletin 2025/27**

(21) Application number: 23859505.2

(22) Date of filing: **01.09.2023**

(51) International Patent Classification (IPC):
*C22C 21/10* $^{(2006.01)}$   *C22C 21/00* $^{(2006.01)}$
*B22F 10/28* $^{(2021.01)}$   *B22F 10/20* $^{(2021.01)}$
*B22F 10/00* $^{(2021.01)}$   *B22F 9/08* $^{(2006.01)}$

(52) Cooperative Patent Classification (CPC):
**B22F 1/00; B22F 1/142; B22F 10/00; B22F 10/20;**
**B22F 10/28; B33Y 10/00; B33Y 70/00; C22C 21/00;**
**C22C 21/10;** B22F 9/08

(86) International application number:
**PCT/CN2023/116613**

(87) International publication number:
**WO 2024/046478 (07.03.2024 Gazette 2024/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.09.2022 CN 202211070616**

(71) Applicant: **Xi'an Bright Laser Technologies Co.,**
**Ltd.**
**Xi'an, Shaanxi 710000 (CN)**

(72) Inventors:
• **ZHAO, Wei**
**Shaanxi 710000 (CN)**
• **ZHAO, Cheng**
**Shaanxi 710000 (CN)**
• **XUE, Lei**
**Shaanxi 710000 (CN)**

(74) Representative: **Murgitroyd & Company**
**165-169 Scotland Street**
**Glasgow G5 8PL (GB)**

(54) **HIGH-STRENGTH ALUMINUM ALLOY POWDER AND PREPARATION METHOD THEREFOR, AND HIGH-STRENGTH ALUMINUM ALLOY PART AND ADDITIVE MANUFACTURING METHOD THEREFOR**

(57) Provided are a high-strength aluminum alloy powder and a preparation method therefor, and a high-strength aluminum alloy part and an additive manufacturing method therefor. The high-strength aluminum alloy powder comprises the following components by weight percentage: the content of Zn is 4.0 wt.% to 7.0 wt.%, the content of Mg is 1.5 wt.% to 3.5 wt.%, the content of Cu is 1.0 wt.% to 3.5 wt.%, the content of Sc is a, and 0.4 wt.% $\leq$ a< 1.3 wt.%, the content of Zr is no higher than 0.2 wt.%, the content of Fe is no higher than 0.5 wt.%, the content of Si is no higher than 0.4 wt.%, the content of Mn is no higher than 0.5 wt.%, the content of Ti is no higher than 0.2 wt.%, the content of Cr is no higher than 0.28 wt.%, the total content of O and N is no higher than 0.05 wt.%, and the remainder is Al.

FIG. 3

EP 4 578 974 A1

## Description

### CROSS-REFERENCE TO RELATED APPLICATION

This application claims the priority of Chinese Patent Application No. 202211070616.7, filed with the China National Intellectual Property Administration on September 2, 2022, entitled "High-Strength Aluminum Alloy Powder for Additive Manufacturing", the disclosure of which is hereby incorporated by reference in its entirety.

### TECHNICAL FIELD

The present disclosure relates to the technical field of metallic materials, and more specifically, relates to a high-strength aluminum alloy powder and preparation method thereof, as well as a high-strength aluminum alloy part and additive manufacturing method thereof.

### BACKGROUND

With the increasing demand for lightweight and integrated structural-functional designs, high-strength aluminum alloy parts have been extensively used in aerospace and other fields due to their light weight and other excellent physical and chemical properties. These parts serve as structural materials or functional materials to manufacture key components such as aircraft skins, engines, and fuel tanks.

However, existing high-strength aluminum alloy parts face multiple challenges such as low as-cast strength, long manufacturing cycles, difficulty in fabricating parts with complex structures, and material wastage. These issues prevent them from meeting the precision, integration, and complexity requirements of critical fields such as aerospace. As material manufacturing technology continues to evolve, additive manufacturing technology has emerged as a new processing technology for high-strength aluminum alloy parts due to its highly flexible design, simple processing, and integrated structural-functional advantages.

Nevertheless, traditional high-strength aluminum alloy powder materials suffer from cracking in the process of additive manufacturing. Existing aluminum alloy powder materials that are suitable for additive manufacturing are limited, mostly Al-Si based alloys, and the tensile strength of aluminum alloy parts made by additive manufacturing is generally less than 400 MPa, with yield strength less than 350 MPa, making them unsuitable for applications requiring high load-bearing and high service performance.

### SUMMARY

In view of the issues described above, the present disclosure provides a high-strength aluminum alloy powder and preparation method thereof, as well as high-strength aluminum alloy parts and additive manufacturing method thereof. These can reduce or eliminate the cracking phenomenon of high-strength aluminum alloy powder during the additive manufacturing process and improve the strength of high-strength aluminum alloy parts.

The technical solutions of the embodiments of the present disclosure are implemented as follows.

According to a first aspect, embodiments provide a high-strength aluminum alloy powder, comprising the following components by weight percentage:

Zn: 4.0 wt.% to 7.0 wt.%;
Mg: 1.5 wt.% to 3.5 wt.%;
Cu: 1.0 wt.% to 3.5 wt.%;
Sc: 0.4 wt.% to 1.3 wt.%;
Zr: not exceeding 0.2 wt.%;
Fe: not exceeding 0.5 wt.%;
Si: not exceeding 0.4 wt.%;
Mn: not exceeding 0.5 wt.%;
Ti: not exceeding 0.2 wt.%;
Cr: not exceeding 0.28 wt.%;
O and N: a total content of O and N not exceeding 0.05 wt.%; and
Al: being the balance.

In some embodiments, the content of Sc is denoted as "a" and $0.4 \text{ wt.}\% \leq a < 0.5 \text{ wt.}\%$.
In some embodiments, the content of Sc is denoted as "a" and $0.5 \text{ wt.}\% \leq a < 0.7 \text{ wt.}\%$.
In some embodiments, the content of Sc is denoted as "a" and $0.7 \text{ wt.}\% \leq a < 1.0 \text{ wt.}\%$.

In some embodiments, the content of Sc is denoted as "a", and 1.0 wt.% ≤ a ≤ 1.3 wt.%.

In some embodiments, the particle size of the high-strength aluminum alloy powder is less than 180 μm.

In some embodiments, the particle size of the high-strength aluminum alloy powder is in the range of 15 μm to 53 μm.

According to a second aspect, embodiments provide a preparation method for the high-strength aluminum alloy powder, including:

uniformly melting metal raw materials in a predetermined composition ratio, where the metal raw materials comprising the following components by weight percentage:

Zn: 4.0 wt.% to 7.0 wt.%;
Mg: 1.5 wt.% to 3.5 wt.%;
Cu: 1.0 wt.% to 3.5 wt.%;
Sc: 0.4 wt.% to 1.3 wt.%;
Zr: not exceeding 0.2 wt.%;
Fe: not exceeding 0.5 wt.%;
Si: not exceeding 0.4 wt.%;
Mn: not exceeding 0.5 wt.%;
Ti: not exceeding 0.2 wt.%;
Cr: not exceeding 0.28 wt.%;
O and N: a total content of O and N not exceeding 0.05 wt.%; and
Al: being the balance;

and preparing the high-strength aluminum alloy powder by gas atomization based on the uniformly melted metal raw materials.

In some embodiments, the content of Sc is denoted as "a"; where
0.4 wt.% ≤ a < 0.5 wt.%, or 0.5 wt.% ≤ a < 0.7 wt.%, or 0.7 wt.% ≤ a < 1 wt.%, or 1.0 wt.% ≤ a ≤ 1.3 wt.%.

According to a third aspect, embodiments provide an additive manufacturing method for a high-strength aluminum alloy part, the method including:

adding the high-strength aluminum alloy powder according to the first aspect, to a powder feeding hopper of a build chamber;
laying, on a surface of the substrate, a first layer of the high-strength aluminum alloy powder supplied by the powder feeding hopper, and scanning, by the laser beam, the first layer of high-strength aluminum alloy powder to form a first selective laser melting layer;
lowering the substrate after solidification of the first selective laser melting layer;
laying, on the upper surface of the solidified first selective laser melting layer, a second layer of the high-strength aluminum alloy powder supplied by the powder feeding hopper, and scanning, by a laser beam, the second layer of high-strength aluminum alloy powder to form a second selective laser melting layer; and
repeating the above steps to form each subsequent selective laser melting layer, until the high-strength aluminum alloy part is manufactured.

In some embodiments, prior to performing additive manufacturing on the high-strength aluminum alloy powder, the additive manufacturing method further includes:

performing a drying treatment on the high-strength aluminum alloy powder, the drying treatment being conducted in an argon protective atmosphere at a temperature of 100 °C to 150 °C for at least 2 hours;
sieving the dried high-strength aluminum alloy powder to ensure that the particle size of the resulting high-strength aluminum alloy powder is within the range of 15 μm to 53 μm.

According to a fourth aspect, embodiments provide a high-strength aluminum alloy part manufactured using the additive manufacturing method according to the third aspect, where the tensile strength of the deposited high-strength aluminum alloy part is at least 423 MPa, and the yield strength of the deposited high-strength aluminum alloy part is at least 342 MPa.

Compared with the prior art, the present disclosure offers the following beneficial effects.

The present disclosure provides a high-strength aluminum alloy powder and preparation method thereof, as well as a high-strength aluminum alloy part and additive manufacturing method thereof. The high-strength aluminum alloy powder is obtained by adding the strengthening element scandium (Sc) to existing high-strength aluminum alloy powders, so as to form the $Al_3Sc$ phase with aluminum during the additive manufacturing process. During solidification, the $Al_3Sc$ phase acts as a heterogeneous nucleation site for $\alpha$-Al, refining the grains and transforming coarse columnar crystals within the molten pool into fine equiaxed crystals, thereby eliminating hot cracks. Moreover, the $Al_3Sc$ phase is stable, enhancing the strength of the high-strength aluminum alloy parts obtained by additive manufacturing.

## BRIEF DESCRIPTION OF THE DRAWINGS

To more clearly illustrate the technical solutions of the embodiments disclosed herein, the following is a brief introduction to the drawings that will be referred to in the description of the embodiments. The drawings described below are merely exemplary embodiments of the present disclosure.

FIG. 1(a) shows a schematic diagram of the microstructure of a 7XXX aluminum alloy powder with standardized chemical composition after being subjected to additive manufacturing.
FIG. 1(b) shows a schematic diagram of the microstructure of the high-strength aluminum alloy powder according to the disclosure after being subjected to additive manufacturing.
FIG. 2 shows a schematic diagram of the microstructure of the deposited high-strength aluminum alloy part made from the high-strength aluminum alloy powder according to Embodiment 1 after additive manufacturing.
FIG. 3 shows a schematic diagram of the room temperature tensile stress-strain curve of the deposited high-strength aluminum alloy part made from the high-strength aluminum alloy powder according to Embodiment 2 after additive manufacturing.
FIG.4 shows a schematic diagram of the room temperature tensile stress-strain curve of the high-strength aluminum alloy part made from the high-strength aluminum alloy powder according to Embodiment 2 after being subjected to T6 heat treatment.
FIG. 5 shows a schematic diagram of the room temperature tensile stress-strain curve of the deposited high-strength aluminum alloy part made from the high-strength aluminum alloy powder according to Embodiment 4 after additive manufacturing.
FIG. 6 shows a schematic diagram of the room temperature tensile stress-strain curve of the deposited high-strength aluminum alloy part made from the high-strength aluminum alloy powder according to Embodiment 5 after additive manufacturing.

## DETAILED DESCRIPTION OF THE EMBODIMENTS

To make the objectives, technical solutions, and advantages of the present disclosure more apparent, the following describes exemplary embodiments in detail with reference to the accompanying drawings. It is evident that the described embodiments are only a portion of the embodiments of this disclosure and are not intended to limit the scope of the disclosure; modifications can be made without departing from the principles and spirit of the disclosure.

The high-strength aluminum alloy powder according to the embodiments of the present disclosure is a spherical powder with a particle size of less than 180 $\mu$m. The components and their weight percentages of this high-strength aluminum alloy powder are shown in Table 1:

Table 1

| Element | Zn | Mg | Cu | Sc | Zr | Fe |
|---|---|---|---|---|---|---|
| Content / wt.% | 4.0~7.0 | 1.5~3.5 | 1.0~3.5 | 0.4~1.3 | $\leq 0.2$ | $\leq 0.5$ |
| Element | Si | Mn | Ti | Cr | O+N | Al |
| Content / wt.% | $\leq 0.4$ | $\leq 0.5$ | $\leq 0.2$ | $\leq 0.28$ | $\leq 0.05$ | Bal. |

After uniformly melting the metal raw materials in a predetermined composition ratio, the high-strength aluminum alloy powder according to the embodiments of the present disclosure is prepared by gas atomization or other powder preparation techniques. The sphericity of the powder is $\geq 0.8$, and the hollow particle ratio of the powder is $\leq 10\%$.

The high-strength aluminum alloy powder is stored in a vacuum-sealed manner. Prior to additive manufacturing, the high-strength aluminum alloy powder is subjected to a drying treatment, which is performed at a temperature of 100 °C to 150 °C for 2 hours, with both the drying and subsequent cooling processes conducted in an argon protective atmosphere.

When additive manufacturing with the high-strength aluminum alloy powder is performed using selective laser melting, the powder is added to a powder feeding hopper of additive manufacturing equipment. After the oxygen content in a build chamber decreases to below 0.02%, a laser beam scans the high-strength aluminum alloy powder supplied to the substrate from the powder feeding hopper, followed by a layer-by-layer fabrication, to form the high-strength aluminum alloy part. In some embodiments, the process of the laser beam scanning the high-strength aluminum alloy powder on the substrate followed by the layer-by-layer fabrication, can be implemented using selective laser melting. Specifically, when the oxygen content in the build chamber is reduced to below 0.02%, a first layer of high-strength aluminum alloy powder supplied from the powder feeding hopper is laid on the surface of the substrate. The laser beam scans the first layer of high-strength aluminum alloy powder, to form a first selective laser melting layer. After solidification of the first selective laser melting layer, the substrate is lowered. A second layer of high-strength aluminum alloy powder supplied from the powder feeding hopper is laid on the upper surface of the solidified first selective laser melting layer, and the laser beam scans the second layer of high-strength aluminum alloy powder to form a second selective laser melting layer. In this manner, a subsequent selective laser melting layer is deposited until the high-strength aluminum alloy part is manufactured.

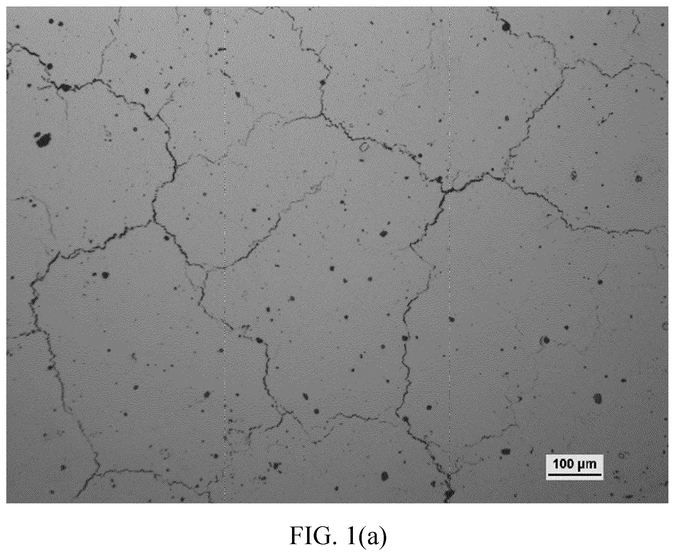

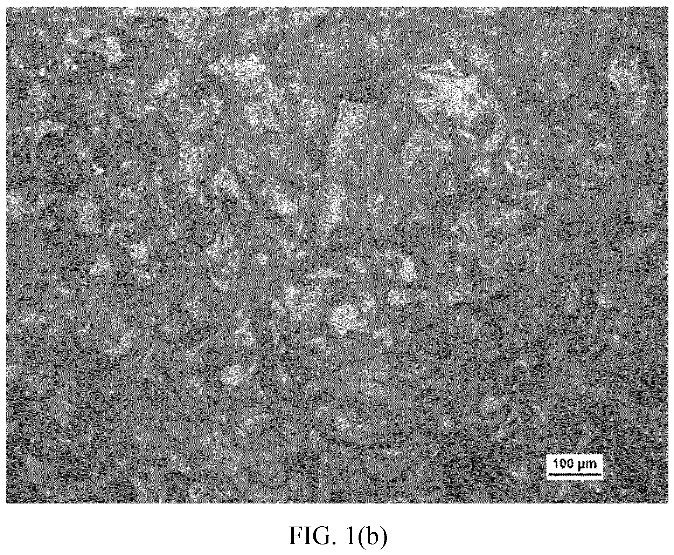

In the embodiments of the present disclosure, the composition of existing high-strength aluminum alloy powders is modified by introducing the characteristic element Sc to form the $Al_3Sc$ phase with aluminum during the additive manufacturing process. During solidification, the $Al_3Sc$ phase acts as a heterogeneous nucleation site for $\alpha$-Al, refining the grains and transforming coarse columnar crystals within the molten pool into fine equiaxed crystals, thus eliminating hot cracks that occur during solidification. This addresses the problem of traditional high-strength aluminum alloy powders being prone to hot cracking during additive manufacturing. FIG. 1(a) shows a schematic diagram of the microstructure of a 7XXX aluminum alloy powder with standardized chemical composition after being subjected to additive manufacturing, which reveals a significant presence of hot cracks. FIG. 1(b) illustrates the microstructure of the high-strength aluminum alloy powder incorporating with characteristic element Sc according to the disclosure after being subjected to additive manufacturing, showing that the hot cracks have been completely eliminated, and the microstructure is dense and uniform.

Embodiment 1

A high-strength aluminum alloy powder is provided, which incorporates the characteristic element Sc into existing high-strength aluminum alloy powder materials. The components and their weight percentages of the high-strength aluminum alloy powder are shown in Table 2:

Table 2

| Element | Zn | Mg | Cu | Sc | Zr | Fe |
|---|---|---|---|---|---|---|
| Content / wt.% | 5.0~6.5 | 2.0~3.0 | 1.0~2.5 | denoted as a, where $0.1 \leq a < 0.4$ | $\leq 0.2$ | $\leq 0.5$ |
| Element | Si | Mn | Ti | Cr | O+N | Al |
| Content / wt.% | $\leq 0.4$ | $\leq 0.3$ | $\leq 0.2$ | $\leq 0.28$ | $\leq 0.05$ | Bal. |

After uniformly melting the metal raw materials in a predetermined composition ratio, the high-strength aluminum alloy powder is prepared using a nitrogen gas atomization process.

The high-strength aluminum alloy powder is subjected to a drying treatment before additive manufacturing. The drying process is carried out at a temperature of 100 °C to 150 °C for 2 hours, with the drying treatment conducted in an argon protective atmosphere. Subsequently, the powder is sieved to ensure that the particle size of the resulting high-strength aluminum alloy powder is within the range of 15 $\mu$m to 53 $\mu$m.

Selective laser melting is employed to fabricate the high-strength aluminum alloy parts from the high-strength aluminum alloy powder.

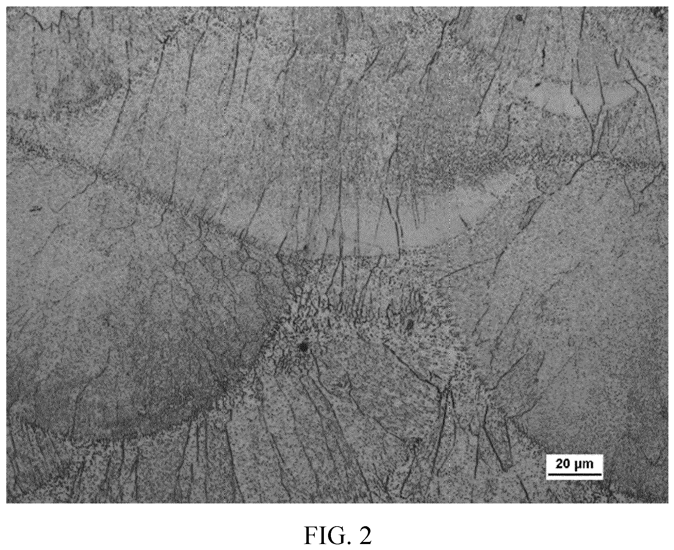

The high-strength aluminum alloy powder according to this embodiment can be manufactured using additive manufacturing equipment, including but limited to the additive manufacturing equipment of the applicant, with model numbers BLT-S310, BLT-S320, BLT-S400, and BLT-S600. The microstructure of the deposited high-strength aluminum alloy parts made by additive manufacturing is illustrated in FIG. 2. As seen from FIG. 2, there are still small hot cracks present in the microstructure, with varying lengths. Compared to the microstructure shown in Figure 1(a), the lengths and widths of the hot cracks in the microstructure depicted in FIG. 2 have been reduced to varying degrees. The differences in the microstructures between FIG. 1(a) and FIG. 2 indicate that when the content of the characteristic element Sc in the high-strength aluminum alloy powder is low, it can mitigate the formation of hot cracks during the additive manufacturing process, but it is challenging to completely eliminate these hot cracks.

Embodiment 2

A high-strength aluminum alloy powder is provided, which incorporates the characteristic element Sc into existing high-strength aluminum alloy powder materials. The components and their weight percentages of the high-strength aluminum alloy powder are shown in Table 3:

Table 3

| Element | Zn | Mg | Cu | Sc | Zr | Fe |
|---|---|---|---|---|---|---|
| Content / wt.% | 5.0~6.5 | 2.0~3.0 | 1.0~2.5 | 0.4~0.7 | ≤ 0.2 | ≤ 0.5 |
| Element | Si | Mn | Ti | Cr | O+N | Al |
| Content / wt.% | ≤ 0.4 | ≤ 0.3 | ≤ 0.2 | ≤ 0.28 | ≤ 0.05 | Bal. |

The metal raw materials are uniformly melted in a predetermined composition ratio, and the high-strength aluminum alloy powder is prepared using a nitrogen gas atomization process.

Prior to additive manufacturing, the high-strength aluminum alloy powder is subjected to a drying treatment. The drying process is performed at a temperature of 100 °C to 150 °C for 2 hours, with the drying treatment conducted in an argon protective atmosphere. Subsequently, the powder is sieved to ensure that the resulting high-strength aluminum alloy powder has a particle size distribution within the range of 15 $\mu$m to 53 $\mu$m.

Selective laser melting is employed to fabricate the high-strength aluminum alloy parts from the high-strength aluminum alloy powder.

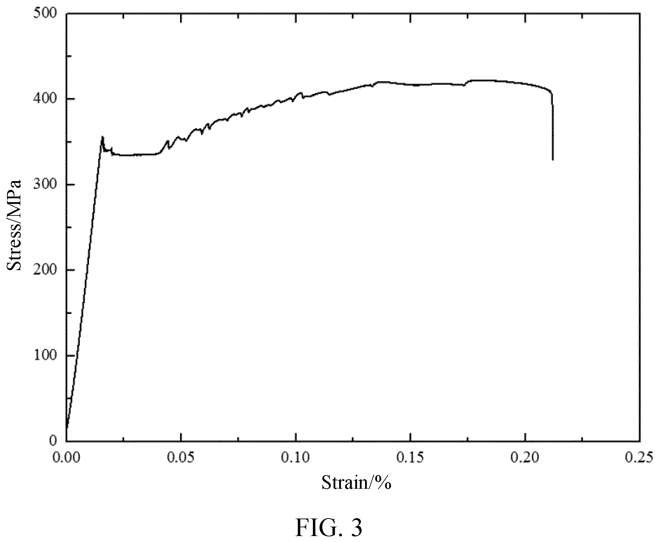

The high-strength aluminum alloy powder according to this embodiment can be processed using additive manufacturing equipment, including but limited to the additive manufacturing equipment of the applicant, with model numbers BLT-S310, BLT-S320, BLT-S400, and BLT-S600. The room temperature tensile stress-strain curve of the deposited high-strength aluminum alloy parts fabricated through additive manufacturing is illustrated in FIG. 3. As shown in FIG. 3, the tensile strength of the deposited high-strength aluminum alloy part made by the high-strength aluminum alloy powder in this embodiment is 423 MPa, the yield strength of the part is 342 MPa, and the elongation of the part is 21%. When the Sc content in the high-strength aluminum alloy powder in this embodiment is 0.5 wt.%, the tensile strength of the resulting deposited high-strength aluminum alloy part remains 423 MPa, the yield strength of the part remains 342 MPa, and the elongation of the part remains 21%.

Embodiment 3

A high-strength aluminum alloy powder is provided, which incorporates the characteristic element Sc into existing high-strength aluminum alloy powder materials. The components and their weight percentages of the high-strength aluminum alloy powder are shown in Table 4:

Table 4

| Element | Zn | Mg | Cu | Sc | Zr | Fe |
|---|---|---|---|---|---|---|
| Content / wt.% | 5.0~6.5 | 2.0~3.0 | 1.0~2.5 | 0.4~0.7 | ≤ 0.2 | ≤ 0.5 |
| Element | Si | Mn | Ti | Cr | O+N | Al |
| Content / wt.% | ≤ 0.4 | ≤ 0.3 | ≤ 0.2 | ≤ 0.28 | ≤ 0.05 | Bal. |

After uniformly melting the metal raw materials in a predetermined composition ratio, the high-strength aluminum alloy powder is prepared using a nitrogen gas atomization process.

Prior to additive manufacturing, the high-strength aluminum alloy powder is subjected to a drying treatment. The drying process is performed at a temperature of 100 °C to 150 °C for 2 hours, with the drying treatment conducted in an argon protective atmosphere. Subsequently, the powder is sieved to ensure that the resulting high-strength aluminum alloy powder has a particle size distribution within the range of 15 $\mu$m to 53 $\mu$m.

Selective laser melting is employed to fabricate the high-strength aluminum alloy parts from the high-strength aluminum alloy powder.

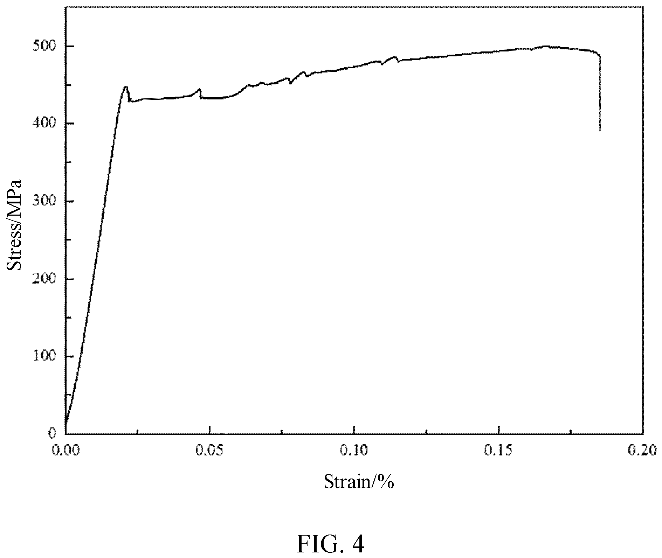

The high-strength aluminum alloy powder according to this embodiment can be processed using additive manufacturing equipment, including but limited to the additive manufacturing equipment of the applicant, with model numbers BLT-S310, BLT-S320, BLT-S400, and BLT-S600. The room temperature tensile stress-strain curve of the high-strength aluminum alloy parts fabricated through additive manufacturing and subsequent T6 heat treatment is illustrated in FIG. 4. As shown in FIG. 4, the tensile strength of the high-strength aluminum alloy part made from the high-strength aluminum alloy powder according to this embodiment after T6 heat treatment is 501 MPa, yield strength of the part is 443 MPa, and elongation of the part is 17%.

The significant enhancement in tensile strength and yield strength of the high-strength aluminum alloy parts after T6 heat treatment according to this embodiment is attributed to the nanoscale fine precipitates in the microstructure of the high-strength aluminum alloy parts, which act as secondary phases that precipitate from the Al matrix during aging. This fine secondary phase can significantly improve the strength of the high-strength aluminum alloy parts. However, after T6 heat treatment, the grain structure in the microstructure may coarsen, leading to a reduction in the plasticity of the high-strength aluminum alloy parts. This process of increasing the strength properties of the high-strength aluminum alloy parts is referred to as the aging strengthening process.

Embodiment 4

A high-strength aluminum alloy powder is provided, which incorporates the characteristic element Sc into existing high-strength aluminum alloy powder materials. The components and their weight percentages of the high-strength aluminum alloy powder are shown in Table 5:

Table 5

| Element | Zn | Mg | Cu | Sc | Zr | Fe |
|---|---|---|---|---|---|---|
| Content / wt.% | 5.0~6.5 | 2.0~3.0 | 1.0~2.5 | denoted as a, where $0.7 \leq a < 1.0$ | $\leq 0.2$ | $\leq 0.5$ |
| Element | Si | Mn | Ti | Cr | O+N | Al |
| Content / wt.% | $\leq 0.4$ | $\leq 0.3$ | $\leq 0.2$ | $\leq 0.28$ | $\leq 0.05$ | Bal. |

After uniformly melting the metal raw materials in a predetermined composition ratio, the high-strength aluminum alloy powder is prepared using a nitrogen gas atomization process.

Prior to additive manufacturing, the high-strength aluminum alloy powder is subjected to a drying treatment. The drying process is performed at a temperature of 100 °C to 150 °C for 2 hours, with the drying treatment conducted in an argon protective atmosphere. Subsequently, the powder is sieved to ensure that the resulting high-strength aluminum alloy powder has a particle size distribution within the range of 15 μm to 53 μm.

Selective laser melting is employed to fabricate the high-strength aluminum alloy parts from the high-strength aluminum alloy powder.

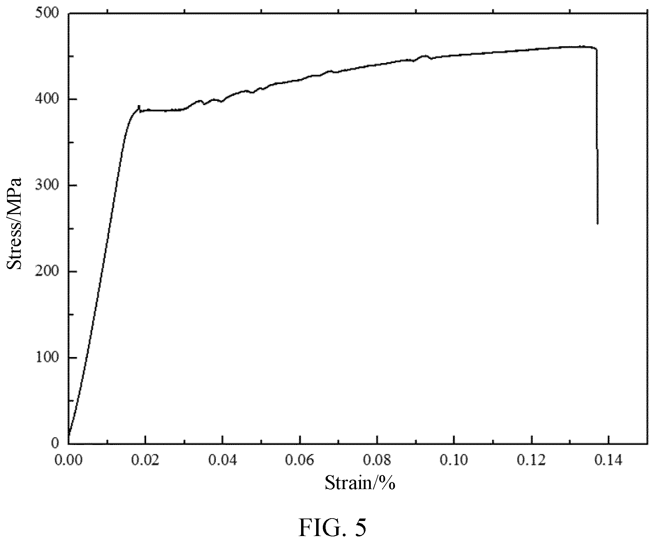

The high-strength aluminum alloy powder according to this embodiment can be processed using additive manufacturing equipment of applicant, including but limited to the additive manufacturing equipment of the applicant, with model numbers BLT-S310, BLT-S320, BLT-S400, and BLT-S600. The room temperature tensile stress-strain curve of the deposited high-strength aluminum alloy parts fabricated through additive manufacturing from the high-strength aluminum alloy powder is illustrated in FIG. 5. As shown in FIG. 5, the tensile strength of the deposited high-strength aluminum alloy part made by additive manufacturing from the high-strength aluminum alloy powder according to this embodiment is 462 MPa, the yield strength of the part is 388 MPa, and the elongation of the part is 14%.

Embodiment 5

A high-strength aluminum alloy powder is provided, which incorporates the characteristic element Sc into existing high-strength aluminum alloy powder materials. The components and their weight percentages of this high-strength aluminum alloy powder are shown in Table 6:

Table 6

| Element | Zn | Mg | Cu | Sc | Zr | Fe |
|---|---|---|---|---|---|---|
| Content / wt.% | 5.0~6.5 | 2.0~3.0 | 1.0~2.5 | denoted as a, where $1.0 \leq a \leq 1.3$ | $\leq 0.2$ | $\leq 0.5$ |
| Element | Si | Mn | Ti | Cr | O+N | Al |
| Content / wt.% | $\leq 0.4$ | $\leq 0.3$ | $\leq 0.2$ | $\leq 0.28$ | $\leq 0.05$ | Bal. |

After uniformly melting the metal raw materials in a predetermined composition ratio, the high-strength aluminum alloy powder is prepared using a nitrogen gas atomization process.

Prior to additive manufacturing, the high-strength aluminum alloy powder is subjected to a drying treatment. The drying process is performed at a temperature of 100 °C to 150 °C for 2 hours, with the drying treatment conducted in an argon protective atmosphere. Subsequently, the powder is sieved to ensure that the resulting high-strength aluminum alloy powder has a particle size distribution within the range of 15 $\mu$m to 53 $\mu$m.

Selective laser melting is employed to fabricate the high-strength aluminum alloy parts from the high-strength aluminum alloy powder.

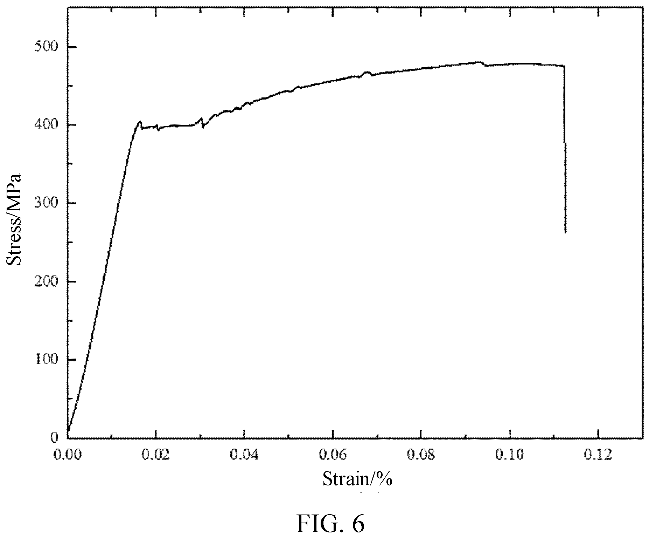

The high-strength aluminum alloy powder according to this embodiment can be processed using additive manufacturing equipment, including but limited to the additive manufacturing equipment of the applicant, with model numbers BLT-S310, BLT-S320, BLT-S400, and BLT-S600. The room temperature tensile stress-strain curve of the deposited high-strength aluminum alloy parts fabricated through additive manufacturing from the high-strength aluminum alloy powder is illustrated in FIG. 6. As shown in FIG. 6, the tensile strength of the deposited high-strength aluminum alloy part made by additive manufacturing from the high-strength aluminum alloy powder according to this embodiment is 481 MPa, the yield strength of the part is 396 MPa, and the elongation of the part is 11%.

According to Embodiments 2 to 5, it can be observed that by adding scandium by weight percentage ranging from 0.4 wt.% to 1.3 wt.% to the existing high-strength aluminum alloy powder materials, the strength of the high-strength aluminum alloy parts fabricated through additive manufacturing is significantly improved. This enhancement allows the manufactured high-strength aluminum alloy parts to be applicable in high-load and high-service environments. Similarly, the high-strength aluminum alloy powder according to the disclosure also effectively mitigates or even eliminates the cracking tendency of the powder during the additive manufacturing process.

The embodiments described herein are provided for illustrative purposes only and should not be considered limiting. Those skilled in the art should understand that various modifications and combinations of these embodiments or their features may be made without departing from the principles and spirit of the present disclosure, and such modifications should fall within the scope of the present disclosure.

**INDUSTRIAL APPLICABILITY**

The embodiments of the present disclosure provides a high-strength aluminum alloy powder and preparation method thereof, as well as a high-strength aluminum alloy part and additive manufacturing method thereof. The high-strength aluminum alloy powder is obtained by adding the strengthening element scandium (Sc) to existing high-strength aluminum alloy powders, so as to form the $Al_3Sc$ phase with aluminum during the additive manufacturing process. During solidification, the $Al_3Sc$ phase acts as a heterogeneous nucleation site for $\alpha$-Al, refining the grains and transforming coarse columnar crystals within the molten pool into fine equiaxed crystals, thus eliminating hot cracks. Moreover, the $Al_3Sc$ phase is stable, enhancing the strength of the high-strength aluminum alloy parts obtained by additive manufacturing.

**Claims**

1. A high-strength aluminum alloy powder, comprising the following components by weight percentage:

   Zn: 4.0 wt.% to 7.0 wt.%;
   Mg: 1.5 wt.% to 3.5 wt.%;
   Cu: 1.0 wt.% to 3.5 wt.%;
   Sc: 0.4 wt.% to 1.3 wt.%;
   Zr: not exceeding 0.2 wt.%;
   Fe: not exceeding 0.5 wt.%;
   Si: not exceeding 0.4 wt.%;
   Mn: not exceeding 0.5 wt.%;
   Ti: not exceeding 0.2 wt.%;
   Cr: not exceeding 0.28 wt.%;
   O and N: a total content of O and N not exceeding 0.05 wt.%; and
   Al: being the balance.

2. The high-strength aluminum alloy powder according to claim 1, wherein the content of Sc is denoted as "a" and 0.4 wt.% $\leq$ a < 0.5 wt.%.

3. The high-strength aluminum alloy powder according to claim 1, wherein the content of Sc is denoted as "a" and 0.5 wt.% $\leq$ a < 0.7 wt.%.

4. The high-strength aluminum alloy powder according to claim 1, wherein the content of Sc is denoted as "a" and 0.7 wt.% $\leq$ a < 1.0 wt.%.

5. The high-strength aluminum alloy powder according to claim 1, wherein the content of Sc is denoted as "a", and 1.0 wt.% ≤ a ≤ 1.3 wt.%.

6. The high-strength aluminum alloy powder according to any one of claims 1 to 5, wherein the particle size of the high-strength aluminum alloy powder is less than 180 μm.

7. The high-strength aluminum alloy powder according to claim 6, wherein the particle size of the high-strength aluminum alloy powder is in the range of 15 μm to 53 μm.

8. A preparation method for a high-strength aluminum alloy powder, the preparation method comprising:

uniformly melting metal raw materials in a predetermined composition ratio, where the metal raw materials comprising the following components by weight percentage:

Zn: 4.0 wt.% to 7.0 wt.%;
Mg: 1.5 wt.% to 3.5 wt.%;
Cu: 1.0 wt.% to 3.5 wt.%;
Sc: 0.4 wt.% to 1.3 wt.%;
Zr: not exceeding 0.2 wt.%;
Fe: not exceeding 0.5 wt.%;
Si: not exceeding 0.4 wt.%;
Mn: not exceeding 0.5 wt.%;
Ti: not exceeding 0.2 wt.%;
Cr: not exceeding 0.28 wt.%;
O and N: a total content of O and N not exceeding 0.05 wt.%; and
Al: being the balance,

and preparing the high-strength aluminum alloy powder by gas atomization based on the uniformly melted metal raw materials.

9. The preparation method according to claim 8, wherein the content of Sc is denoted as "a"; wherein

$$0.4 \text{ wt.\%} \le a < 0.5 \text{ wt.\%},$$

or

$$0.5 \text{ wt.\%} \le a < 0.7 \text{ wt.\%},$$

or

$$0.7 \text{ wt.\%} \le a < 1 \text{ wt.\%},$$

or

$$1.0 \text{ wt.\%} \le a \le 1.3 \text{ wt.\%}.$$

10. An additive manufacturing method for a high-strength aluminum alloy part, comprising:

adding the high-strength aluminum alloy powder according to any one of claims 1 to 7 to a powder feeding hopper of a build chamber;
laying, on a surface of the substrate, a first layer of the high-strength aluminum alloy powder supplied by the powder feeding hopper, and scanning, by the laser beam, the first layer of the high-strength aluminum alloy powder to form a first selective laser melting layer;
lowering the substrate after solidification of the first selective laser melting layer;
laying, on the upper surface of the solidified first selective laser melting layer, a second layer of the high-strength aluminum alloy powder supplied by the powder feeding hopper, and scanning, by a laser beam, the second layer of the high-strength aluminum alloy powder to form a second selective laser melting layer;

repeating the above steps to form each subsequent selective laser melting layer, until the high-strength aluminum alloy part is manufactured.

11. The additive manufacturing method according to claim 10, wherein, prior to performing additive manufacturing on the high-strength aluminum alloy powder, the method further comprises:

performing a drying treatment on the high-strength aluminum alloy powder, the drying treatment being conducted in an argon protective atmosphere at a temperature of 100 °C to 150 °C for at least 2 hours;

sieving the dried high-strength aluminum alloy powder to ensure that the particle size of the resulting high-strength aluminum alloy powder is within the range of 15 $\mu$m to 53 $\mu$m.

12. A high-strength aluminum alloy part, manufactured using an additive manufacturing method according to claim 10 or 11, wherein the tensile strength of the deposited high-strength aluminum alloy part is at least 423 MPa, and the yield strength of the deposited high-strength aluminum alloy part is at least 342 MPa.

FIG. 1(a)

FIG. 1(b)

FIG. 2

FIG. 3

FIG. 4

FIG. 5

FIG. 6

**EP 4 578 974 A1**

<table>
<tr><td colspan="2" style="text-align:center"><b>INTERNATIONAL SEARCH REPORT</b></td><td>International application No.<br><br><b>PCT/CN2023/116613</b></td></tr>
</table>

**A. CLASSIFICATION OF SUBJECT MATTER**

C22C21/10(2006.01)i; C22C21/00(2006.01)i; B22F10/28(2021.01)i; B22F10/20(2021.01)i; B22F10/00(2021.01)i; B22F9/08(2006.01)n

According to International Patent Classification (IPC) or to both national classification and IPC

**B. FIELDS SEARCHED**

Minimum documentation searched (classification system followed by classification symbols)

IPC:C22C B22F

Documentation searched other than minimum documentation to the extent that such documents are included in the fields searched

Electronic data base consulted during the international search (name of data base and, where practicable, search terms used)

CNTXT, ENTXTC, VEN, WPABSC, WEB OF SCIENCE, CNKI: 铝合金, 铝基, Al合金, Al基, 钪, 锌, 镁, 铜, 3D打印, 三维打印, 选择性激光熔化, 选区激光熔化, 激光选区熔化, 选择性激光熔融, 增材制造, 裂纹, 开裂, 粉末, 粉体, 雾化, AA7075, al alloy, aluminum alloy, aluminium alloy, al base?, aluminium base?, aluminum base?, Sc, Zn, Mg, Cu, Scandium, znic, magnesium, copper, SLM, Additive Manufactur???, "3D" 1W print???, slective laser melt???

**C. DOCUMENTS CONSIDERED TO BE RELEVANT**

| Category* | Citation of document, with indication, where appropriate, of the relevant passages | Relevant to claim No. |
|---|---|---|
| X | BI, Jiang et al. "Microstructure and mechanical properties of a novel Sc and Zr modified 7075 aluminum alloy prepared by selective laser melting"<br>*Materials Science & Engineering A*, Vol. 768, 30 September 2019 (2019-09-30), pages 1-9<br>page 2, left-hand column, last paragraph to right-hand column, paragraph 1, and table 1, and figure 2 | 1-2, 6, 10, 12 |
| Y | BI, Jiang et al. "Microstructure and mechanical properties of a novel Sc and Zr modified 7075 aluminum alloy prepared by selective laser melting"<br>*Materials Science & Engineering A*, Vol. 768, 30 September 2019 (2019-09-30), pages 1-9<br>page 2, left-hand column, last paragraph to right-hand column, paragraph 1, and table 1, and figure 2 | 3-5, 7-9, 11 |
| Y | CN 112831698 A (ANDRON (CHONGQING) MATERIAL TECHNOLOGY CO., LTD.) 25 May 2021 (2021-05-25)<br>description, paragraphs 4-5, 17-18 and 37 | 3-5, 7-9, 11 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 November 2023** | **02 December 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**EP 4 578 974 A1**

## INTERNATIONAL SEARCH REPORT

International application No.

**PCT/CN2023/116613**

### C.    DOCUMENTS CONSIDERED TO BE RELEVANT

| Category* | Citation of document, with indication, where appropriate, of the relevant passages | Relevant to claim No. |
|---|---|---|
| X | BI, Jiang et al. "Effect of process parameters on formability and surface quality of selective laser melted Al-Zn-Sc-Zr alloy from single track to block specimen" *Optics and Laser Technology,* Vol. 118, 15 May 2019 (2019-05-15), pages 132-139<br>table 1, and section 2.2, SLM process | 1-2, 6-7, 10-12 |
| Y | BI, Jiang et al. "Effect of process parameters on formability and surface quality of selective laser melted Al-Zn-Sc-Zr alloy from single track to block specimen" *Optics and Laser Technology,* Vol. 118, 15 May 2019 (2019-05-15), pages 132-139<br>table 1, and section 2.2, SLM process | 3-5, 8-9 |
| X | ZHU, Zhiguang et al. "Superior mechanical properties of a selective-laser-melted AlZnMgCuScZr alloy enabled by a tunable hierarchical microstructure and dual-nanoprecipitation" *Materials Today,* Vol. 52, 28 February 2022 (2022-02-28), pages 90-101<br>abstract, and page 91, right-hand column, Materials and methods | 1-2, 6-12 |
| Y | ZHU, Zhiguang et al. "Superior mechanical properties of a selective-laser-melted AlZnMgCuScZr alloy enabled by a tunable hierarchical microstructure and dual-nanoprecipitation" *Materials Today,* Vol. 52, 28 February 2022 (2022-02-28), pages 90-101<br>abstract, and page 91, right-hand column, Materials and methods | 3-5 |
| X | CN 111440975 A (HUNAN ORIENTAL SCANDIUM INDUSTRY CO., LTD.) 24 July 2020 (2020-07-24)<br>description, paragraphs 10-17 and 28 | 1-3, 6-12 |
| Y | CN 111440975 A (HUNAN ORIENTAL SCANDIUM INDUSTRY CO., LTD.) 24 July 2020 (2020-07-24)<br>description, paragraphs 10-17, 28 | 4-5 |
| A | CN 109487126 A (CRRC INDUSTRY RESEARCH INSTITUTE CO., LTD. et al.) 19 March 2019 (2019-03-19)<br>entire document | 1-12 |

Form PCT/ISA/210 (second sheet) (July 2022)

**INTERNATIONAL SEARCH REPORT**
Information on patent family members

International application No.

**PCT/CN2023/116613**

| Patent document cited in search report | | | Publication date (day/month/year) | Patent family member(s) | | | Publication date (day/month/year) |
|---|---|---|---|---|---|---|---|
| CN | 112831698 | A | 25 May 2021 | CN | 112831698 | B | 25 March 2022 |
| CN | 111440975 | A | 24 July 2020 | None | | | |
| CN | 109487126 | A | 19 March 2019 | EP | 3851548 | A1 | 21 July 2021 |
| | | | | EP | 3851548 | A4 | 05 January 2022 |
| | | | | WO | 2020125553 | A1 | 25 June 2020 |
| | | | | CN | 109487126 | B | 02 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211070616